# EUROPEAN PATENT SPECIFICATION

(11) **EP 1 965 292 B1**
(45) Date of publication and mention of the grant of the patent: **08.11.2017**
(21) Application number: 07014597.4
(22) Date of filing: 25.07.2007
(51) Int. Cl.: G06F 3/033, H04M 1/247

(54) **Mobile communication terminal with 2 dimentional input device**
Mobiles Kommunikationsendgerät mit zweidimensionaler Eingabevorrichtung
Terminal de communication mobile avec un dispositif d'entrée en deux dimensions

(30) Priority: 27.02.2007 KR 20070019735; 28.02.2007 KR 20070020416
(43) Date of publication of application: 03.09.2008
(73) Proprietor: LG ELECTRONICS INC., Yongdungpo-gu Seoul, 150-721 (KR)
(72) Inventor: Cheon, Jee Young, Dongjak-ku, Seoul 156-060 (KR); Lee, Kyung Ik, Kwangmyung-si, Kyunggi-do, 423-033 (KR)
(74) Representative: Thum, Bernhard

(56) References cited:
- EP-A- 1 406 158
- WO-A-2004/053828
- US-A1- 2002 030 665
- US-A1- 2006 146 019
- US-B1- 6 593 909

## Description

### BACKGROUND OF THE INVENTION

### 1. Field of the Invention

The present invention relates to a mobile communication terminal, and more particularly, to a mobile communication terminal having an input device for inputting various information.

### 2. Description of the Related Art

In general, a mobile communication terminal includes a mobile phone, a Personal Digital Assistant (PDA), and a mobile PC, and is an advanced communication appliance that can perform various computer works through network connection as well as wireless communication regardless of a place.

Nowadays, the mobile communication terminal has various additional functions such as an Internet search, a game, and E-mail reception in addition to a communication function for transferring a voice. Accordingly, the mobile communication terminal has a navigation key for using as a direction key for enabling a user to easily use various additional functions.

However, in order to move a curser to a desired position using a conventional button type navigation key, the user should perform many repeated operations, and it is inconvenient to use the key in an Internet mode and a game mode requiring the quick and minute direction control.

EP 1 406 158 A discloses a portable electronic equipment comprising a display means, a first manipulator means for performing a first screen process on the information displayed, a second manipulator means for performing a second screen process on the information by operation in a circumferential direction thereof, and a controller means. The controller means controls the first manipulator means, the second manipulator means, and the display means.

US 6 593 909 B1 discloses a direction-control switch module including a cross-channel disposed in an inner wall of an upper cover and an opposite base respectively and a control set disposed between the upper cover and the base. A common pin and plurality connecting pins extend to the hub or terminals of the cross-channel in the base. An actuation portion includes a center hole being protrusively disposed in the upper cover in an axial line defined by the center of the upper cover and the base. The control set further includes a pushbutton having an axial hole and a spherical portion, a shaft, and resilient members.

US 2006/146019 A1 discloses a control device for browsing and selecting an item in a list. The control device comprises a stick means, which is coupled with a joint to the control device, a switch and a sensor. The switch is adapted to make contact and generate a digital-type output signal when the stick means is deflected from its rest position in a direction, and after the contact the sensor is adapted to generate an analog output signal when the stick means is further deflected in the same direction from its rest position as when the digital type output signal was generated.

WO 2004/053828 A discloses an electronic device including a base, a display and a cursor control member. The cursor control member includes a housing. The cursor control member has an attachment element arranged at one end of the housing for detachably fixing the cursor control member to the base. A port is carried by the base for receiving the attachment element of the cursor control member. The port is adapted to translate movement of the cursor control member into control signals for directing movement of a cursor in the display when the cursor control member is engaged with the port.

US 2002/030665 A1 discloses a coordinate input device having a keyboard, a rotary dial annular in shape and mounted in substantially the same plane as the keyboard, the rotary dial being rotatable within the plane, and a rotation detector for detecting the amount and direction of rotation of the rotary dial, and wherein the rotary dial is disposed below the keyboard.

### SUMMARY OF THE INVENTION

The present invention has been made in an effort to solve the above problems, and the present invention provides a mobile communication terminal that can embody various user interfaces and improve manipulation convenience.

According to an aspect of the present invention, there is provided a mobile communication terminal according to claim 1.

The navigation key unit may perform at least two input operations with a press method.

The navigation key unit may include: a manipulation panel that is disposed to surround the pole or the track ball and that has top, bottom, right and left portions to be pressed down; and a contact detector that is disposed in a position of the PCB corresponding to top, bottom, right and left portions of the manipulation panel to detect the manipulation of the manipulation panel.

The navigation key unit may perform an input operation with a touch method.

The navigation key unit may include: a manipulation panel that is disposed to surround the pole or the trackball; and a sensor for sensing a signal changing according to the contact with the manipulation panel.

The navigation key unit may perform at least two input operations with a press method and an input operation with a touch method.

The navigation key unit may include: a manipulation panel that is disposed to surround the pole or the track ball and that has top, bottom, right and left portions to be pressed down; a contact detector that is disposed in a position of the PCB corresponding to top, bottom, right and left portions of the manipulation panel to detect the manipulation of the manipulation panel; and a sensor for sensing a signal changing according to the contact with the manipulation panel.

The control unit may be used as a mode switching key for performing the switch between a first mode of performing an input operation with only a press method in the navigation key unit and a second mode of performing an input operation with only a touch method in the navigation key unit.

The control unit may perform, when the pole or the trackball is pressed down, a function corresponding to any one of a confirmation key, a selection key, and a mode switching key.

When web contents are used, the control unit may control a direction of a cursor displayed on the web contents and the navigation key unit can perform the vertical scroll and lateral scroll control on the web contents.

### BRIEF DESCRIPTION OF THE DRAWING

The embodiment of the invention will be described in detail with reference to the following drawings in which like numerals refer to like elements.
- FIG. 1: s a perspective view of a mobile communication terminal according to an exemplary embodiment of the present invention;
- FIG. 2: s an exploded perspective view of an input device of a mobile communication terminal according to an exemplary embodiment of the present invention;
- FIG. 3: s a cross-sectional view of the input device shown in FIG. 2;
- FIG. 4: s a schematic view illustrating an example of applying the input device shown in FIG. 2 in an Internet mode;
- FIG. 5: an exploded perspective view of an input device of a mobile communication terminal according to another exemplary embodiment of the present invention;
- FIG. 6: s a cross-sectional view of the input device shown in FIG. 5;
- FIG. 7: s an exploded perspective view of an input device of a mobile communication terminal according to another exemplary embodiment of the present invention;
- FIG. 8: a cross-sectional view of the input device shown in FIG. 7.
- FIG. 9: a perspective view of a mobile communication terminal according to another exemplary embodiment of the present invention;
- FIG. 10: is an exploded perspective view of an input device of a mobile communication terminal according to another exemplary embodiment of the present invention;
- FIG. 11: is a cross-sectional view of the input device shown in FIG. 10; FIG. 12 is a schematic view illustrating an example of applying the input device shown in FIG. 10 in an Internet mode;
- FIG. 13: is an exploded perspective view of an input device of a mobile communication terminal according to another exemplary embodiment of the present invention;
- FIG. 14: is a cross-sectional view of the input device shown in FIG. 13;
- FIG. 15: s an exploded perspective view of an input device of a mobile communication terminal according to another exemplary embodiment of the present invention; and
- FIG. 16: s a cross-section vie of the input device shown in FIG. 15

### DETAILED DESCRIPTION OF THE PREFERRED EMBODIMENT

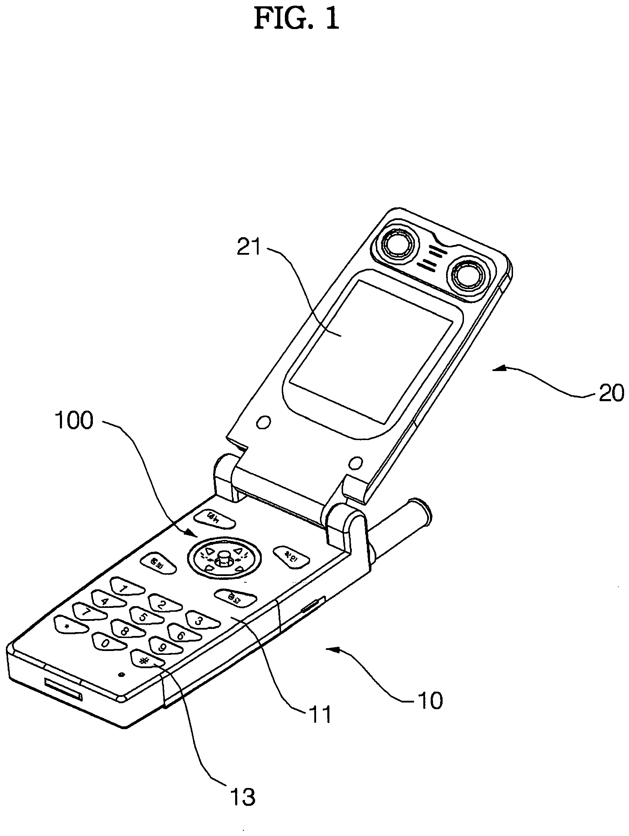

Hereinafter, an exemplary embodiment according to the present invention will be described in detail with reference to FIGS. 1 to 4.

FIG. 1 is a perspective view of a mobile communication terminal according to an exemplary embodiment of the present invention.

The mobile communication terminal shown in FIG. 1 is a folder type mobile phone, and includes a main body 10 and a folder unit 20. In a front case 11 of the main body 10, input devices 100 for inputting various information to a controller (not shown) and a plurality of button keys 13 are provided, and in the folder unit 20, a display unit 21 for displaying various visible information is provided.

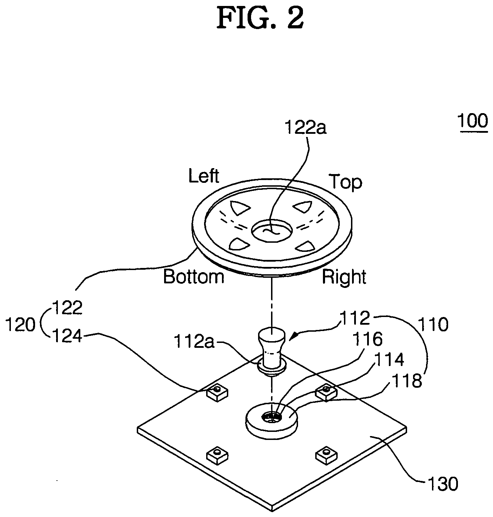

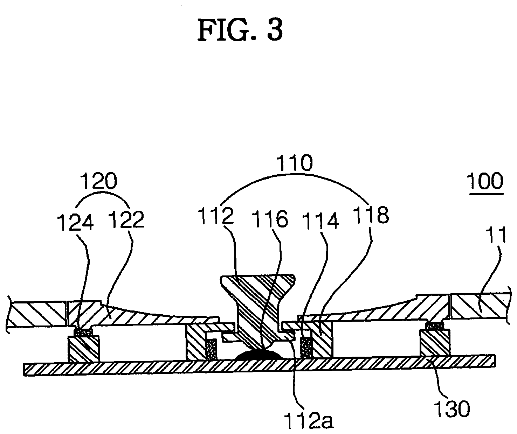

FIG. 2 is an exploded perspective view of an input device 100 of a mobile communication terminal according to an exemplary embodiment of the present invention. FIG. 3 is a cross-sectional view of the input device 100 shown in FIG. 2. Referring to FIGS. 2 and 3, the input device 100 includes a joystick unit 110 for performing an input operation in various directions including vertical, lateral, and diagonal directions, a navigation key unit 120 that is adjacently disposed to an outer circumference of the joystick unit 110 and for performing at least two input operations in a press method, and a Printed Circuit Board (PCB) 130 for receiving a signal that is input through the joystick unit 110 and the navigation key unit 120.

The joystick unit 110 includes a pole 112 for manipulating in various directions including vertical, lateral, and diagonal directions, i.e. 360° direction and a direction detector 114 for detecting a manipulation direction of the pole 112.

The joystick unit 110 further includes a cylindrical frame unit 118 that is disposed at the center of the PCB 130. The frame unit 118 defines a space for inserting and manipulating the pole 112, and a direction detector 114 for detecting a manipulation direction of the pole 112 is provided within the frame unit 118. A lower end of the direction detector 114 is electrically connected to the PCB 130 to transfer a manipulation direction of the pole 112 by manipulation of a user to the PCB 130.

The pole 112 is provided to be manipulated in 360° direction within the frame unit 118, and an upper end of the pole 112 has a height to be exposed to an upper part of the navigation key unit 120. A direction projection 112a is protruded to the outside at the side of the pole 112 so that a manipulation direction of the pole 112 may be detected by the direction detector 114. The direction projection 112a may be formed in segments divided into a plurality of pieces.

In the present exemplary embodiment, the direction detector 114 includes a magnetic sensor, divided into 8 pieces at the inside of the frame unit 118, for sensing 8 directions of vertical, lateral, and diagonal directions, and the direction projection 112a corresponding to the magnetic sensor is made of a magnetic substance for being sensed by the magnetic sensor. When the pole 112 is leaned toward a specific direction by the user, the direction projection 112a made of a magnetic substance is approached to the direction detector 114 including the magnetic sensor divided into 8 pieces, and the direction detector 114 detects a manipulation direction of the pole 112 and transfers the corresponding signal to the PCB 130.

The joystick unit 110 can perform an input operation in 8 directions, however the present invention is not limited thereto and can use a magnetic sensor divided into more pieces than 8 pieces or employ a different type sensing system, thereby performing an input operation in more divided directions.

Unlike the present exemplary embodiment, the direction detector 114 of the joystick unit 110 may be embodied using a plurality of dome switches having a simple structure instead of a sensing system such as the magnetic sensor. In this case, the dome switch is disposed in a position corresponding to the direction projection 112a of the pole 112.

The joystick unit 110 further includes a dome switch 116 for performing a function corresponding to any one of a confirmation key, a selection key, and a mode switching key, when the pole 112 is pressed down. The dome switch 116 is disposed in the PCB 130 of a position corresponding to lower end of the pole 112. That is, the dome switch 116 is provided in a space defined by the frame unit 118.

The navigation key unit 120 includes a manipulation panel 122 disposed to surround the pole 112 and a contact detector 124 disposed in the PCB to detect the manipulation of the manipulation panel 122.

The manipulation panel 122 is a circular plate, is supported by an upper end of the frame unit 118, and has top, bottom, right and left portions to be pressed down. At the center of the manipulation panel 122, a central hole 122a is formed to insert the pole 112 and to be exposed the pole 112 to the outside. Further, an upper surface of the manipulation panel 122 has a concave central portion for not disturbing the direction manipulation toward top, bottom, right and left portions of the manipulation panel 122 by the pole 112, and arrows for indicating vertical and lateral directions are displayed on the upper surface of the manipulation panel 122, as shown in FIG. 2. Reference numeral 11 indicates the front case of the main body 10.

Four contact detectors 124 are disposed in a position of the PCB 130 corresponding to top, bottom, right and left portions of the manipulation panel 122. That is, four contact detectors 124 are disposed at an interval of 90° in the PCB 130. When the top, bottom, right and left portions of the manipulation panel 122 are pressed down by the user, the contact detectors 124 perform a function of transferring the corresponding signal to the PCB 130.

Here, a general touch switch can be used as the contact detector 124, and instead of the touch switch, any switch for detecting the movement of the manipulation panel 122 and transferring a direction signal to the PCB 130 may be used. For example, as the contact detector 124, a dome switch may be used.

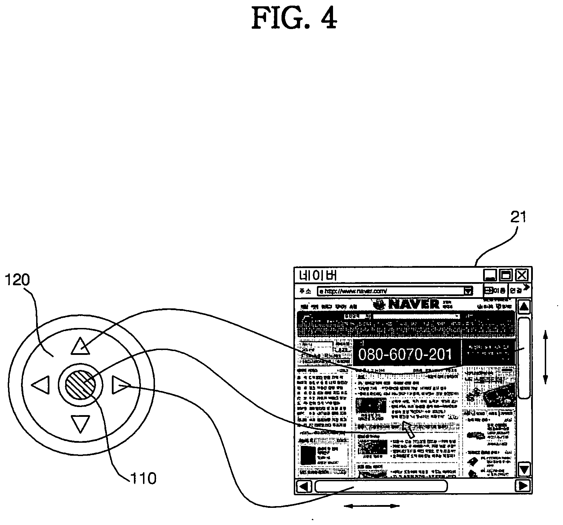

FIG. 4 is a schematic view illustrating an example of applying the input device 100 in an Internet mode.

Referring to FIG. 4, the joystick unit 110 of the input device 100 performs a function of controlling a direction of a cursor displayed on web contents, and the navigation key unit 120 of the input device 100 performs a vertical and lateral scroll control function on web contents. Further, the joystick unit 110 enables a desired article to click on web contents.

Because the input device 100 is divided into two independent input means of the joystick unit 110 and the navigation key unit 120, the direction control of a cursor displayed in the display unit can be allocated to the joystick unit 110 for performing an input operation in various directions including vertical, lateral, and diagonal directions. Accordingly, the input device 100 can perform the quick and convenient direction control in an Internet mode and a game mode.

Particularly, because the display unit of the mobile communication terminal has a size much smaller than a monitor of a computer, a scroll function is frequently used at Internet search, whereby the input device 100 that can allocate a vertical and lateral scroll function to the navigation key unit 120, can provide excellent manipulation convenience.

The input device 100 can be embodied with a user interface of various combinations such as an Internet mode, a game mode, and a camera mode in addition to an example shown in FIG. 4.

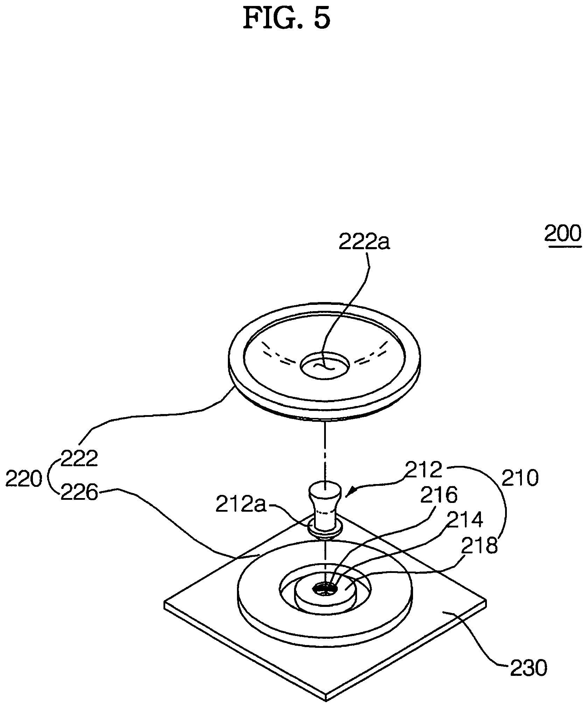

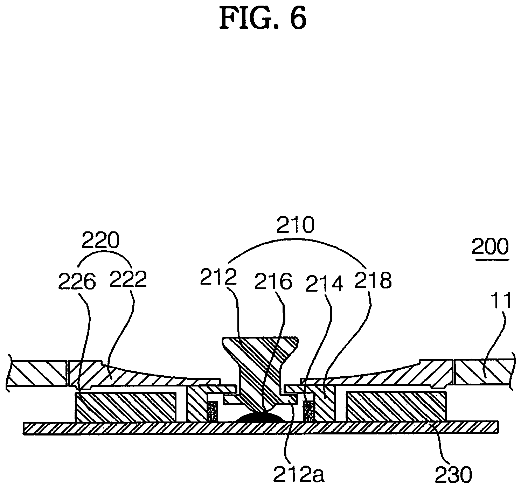

Hereinafter, another exemplary embodiment of the present invention will be described in detail with reference to FIGS. 5 and 6.

FIG. 5 is an exploded perspective view of an input device 200 of a mobile communication terminal according to another exemplary embodiment of the present invention. FIG. 6 is a cross-sectional view of the input device 200 shown in FIG. 5.

Referring to FIGS. 5 and 6, because a configuration of the input device 200 is substantially identical to that of the input device 100 shown in FIG. 2, except that a navigation key unit 220 performs an input operation using a touch method, similar reference numerals designate substantially identical elements, and descriptions thereof will be briefly described.

The input device 200 includes a joystick unit 210 for performing an input operation in various directions including vertical, lateral, and diagonal directions, a navigation key unit 220 that is adjacently disposed to an outer circumference of the joystick unit 210 and for performing an input operation with a touch method, and a PCB 230 for receiving a signal that is input through the joystick unit 210 and the navigation key unit 220.

The joystick unit 210 includes a pole 212 for manipulating in various directions including vertical, lateral, and diagonal directions, i.e. 360° direction and a direction detector 214 for detecting a manipulation direction of the pole 212. The joystick unit 210 further includes a dome switch 216 for performing a function corresponding to any one of a confirmation key, a selection key, and a mode switching key, when the pole 212 is pressed down. The dome switch 216 is disposed in the PCB 230 of a position corresponding to the pole 212.

The navigation key unit 220 includes a manipulation panel 222 that is disposed to surround the pole 212 and a sensor 226 that is disposed in the PCB 230 to sense a signal changing when the user' finger contacts with the manipulation panel 222. That is, the navigation key unit 220 performs an input operation with a touch method. Here, the 'touch method' includes a 'touch screen method' of widely using in various terminals and a 'touch wheel method' of employing in an "iPod" product of the Apple company, and is a method of selecting a menu with soft touch of a finger.

The sensor 226 has a cylindrical shape to surround a circumference of a frame unit 218, and uses a pressure detection sensor for sensing an input direction using the pressure change generating when the user's finger contacts with an upper surface of the manipulation panel 222 or uses a static electricity detection sensor for sensing an input direction using the static electricity change generating when the user's finger contacts with the upper surface of the manipulation panel 222. Any type sensor for embodying a touch method can be applied to the present invention.

The navigation key unit 220 using the touch method can perform a scroll function in an Internet mode. That is, as the user's finger contacts with the upper surface of the manipulation panel 222 and rotates the upper surface in a clockwise or counterclockwise directions, a vertical or lateral scroll function can be embodied in an Internet mode.

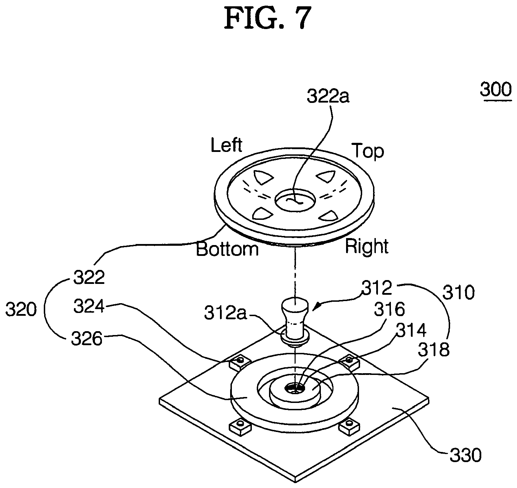

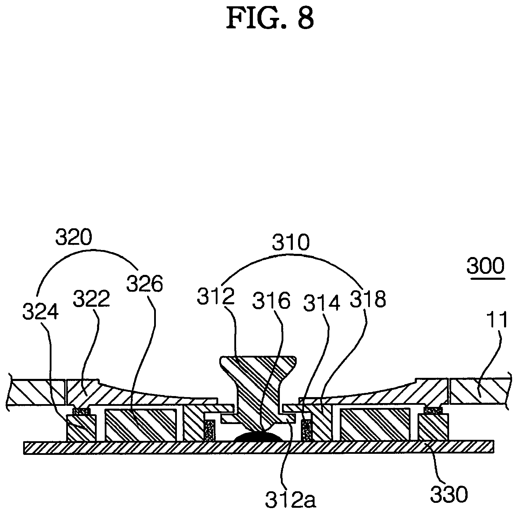

Hereinafter, another exemplary embodiment of the present invention will be described in detail with reference to FIGS. 7 and 8.

FIG. 7 is an exploded perspective view of an input device 300 of a mobile communication terminal according to another exemplary embodiment of the present invention. FIG. 8 is a cross-sectional view of the input device 300 shown in FIG. 7.

Referring to FIGS. 7 and 8, because a configuration of the input device 300 is substantially identical to that of the input device 100 shown in FIG. 2, except that a navigation key unit 320 performs an input operation using two methods of a press method and a touch method, similar reference numerals designate substantially identical elements, and descriptions thereof will be briefly described.

The input device 300 includes a joystick unit 310 for performing an input operation in various directions including vertical, lateral, and diagonal directions, a navigation key unit 320 that is adjacently disposed to an outer circumference of the joystick unit 310 and for performing at least two input operations with a press method and an input operation with a touch method, and a PCB 330 for receiving a signal that is input through the joystick unit 310 and the navigation key unit 320.

The joystick unit 310 includes a pole 312 for manipulating in various directions including vertical, lateral, and diagonal directions, i.e. 360° direction and a direction detector 314 for detecting a manipulation direction of the pole 312. The joystick unit 310 further includes a dome switch 316 for performing a function corresponding to any one of a confirmation key, a selection key, and a mode switching key, when the pole 312 is pressed down. The dome switch 316 is disposed in the PCB 330 of a position corresponding to the pole 312.

The navigation key unit 320 includes a manipulation panel 322 that is disposed to surround the pole 312 and that has top, bottom, right and left portions to be pressed down, four contact detectors 324 that are disposed in a position of the PCB 330 corresponding to top, bottom, right and left portions of the manipulation panel 322 to detect the manipulation of the manipulation panel 322, and a sensor 326 that is disposed in the PCB 330 to detect a signal changing when the user' finger contacts with the manipulation panel 322. The sensor 326 is disposed between the frame unit 318 and the four contact detectors 324, as shown in FIG. 7.

Because the navigation key unit 320 can perform both the input operation using a press method according to the exemplary embodiment shown in FIG. 2 and the input operation using a touch method according to the exemplary embodiment shown in FIG. 5, interfaces of various combinations can be embodied.

The joystick unit 310 can be used as a mode switching key for performing the switch between a first mode (a direction key mode) of performing an input operation with only a press method in the navigation key unit 320 and a second mode (a touch mode) of performing an input operation with only a touch method in the navigation key unit 320. This prevents the user's confusion that may be generated by mixing a press method and a touch method in a specific mode. Particularly, a user unfamiliar with a touch method can use the navigation key unit 320 with only a press method.

As described above, an input device of a mobile communication terminal according to the present invention includes two independent input means of a joystick unit and a navigation key input, thereby embodying various user interfaces and improving manipulation convenience.

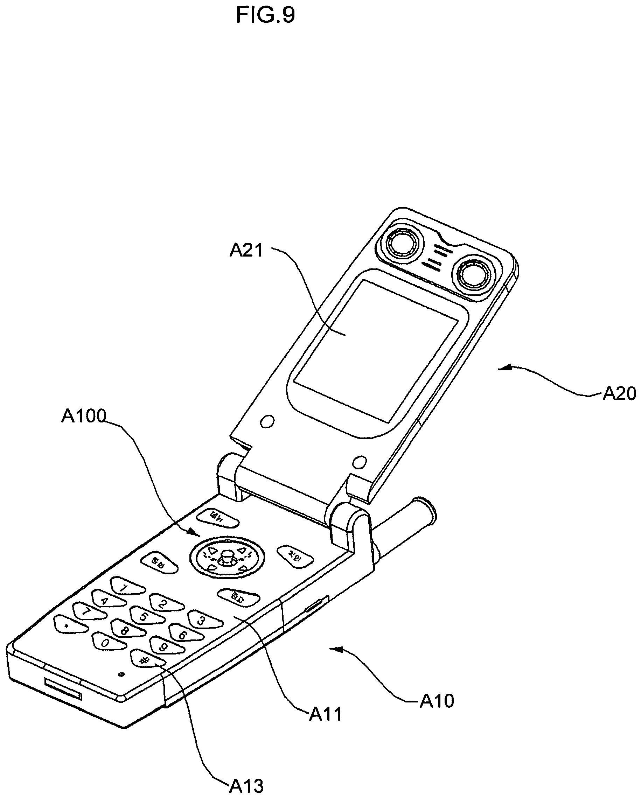

Hereinafter, another exemplary embodiment according to the present invention will be described in detail with reference to FIGS. 9 to 12.

FIG. 9 is a perspective view of a mobile communication terminal according to an exemplary embodiment of the present invention.

The mobile communication terminal shown in FIG. 9 is a folder type mobile phone, and includes a main body A10 and a folder unit A20. In a front case A11 of the main body A10, input device A100 for inputting various information to a controller (not shown) and a plurality of button keys A13 are provided, and in the folder unit A20, a display unit A21 for displaying various visible information is provided.

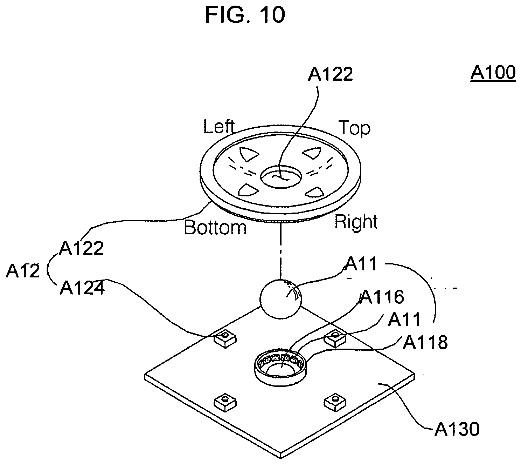

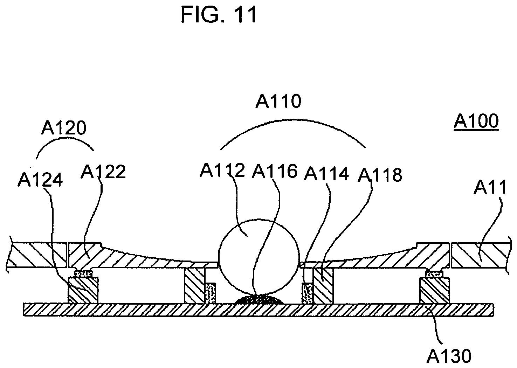

FIG. 10 is an exploded perspective view of an input device A100 of a mobile communication terminal according to an exemplary embodiment of the present invention. FIG. 11 is a cross-sectional view of the input device A100 shown in FIG. 10.

Referring to FIGS. 10 and 11, the input device A100 includes a trackball unit A110, a navigation key unit A120, and a Printed Circuit Board (PCB) A130 for receiving a signal that is input through the trackball unit A110 and the navigation key unit A120.

The trackball unit A110 includes a spherical trackball A112 provided to rotate within a housing A118 and a rotation detector A114 for detecting the rotation of the trackball A112.

The trackball A112 is provided to rotate within the housing A118 and a part of a upper part thereof is exposed to the outside of the housing A118.

The housing A118 has a cylindrical shape disposed at the center of the PCB A130 and defines a space for inserting and rotating the trackball A112, and a rotation detector A114 for detecting a rotation direction of the trackball A112 is provided within the housing A118. A lower end of the rotation detector A114 is electrically connected to the PCB A130 to transfer a rotation manipulation of the trackball A112 by a user to the PCB A130.

The rotation detector A114 is formed to detect the rotation of the trackball A112. For example, the rotation detector A114 has orthogonal X axis and Y axis rotating due to frictional contact with the trackball 112 at a lower part of the trackball A112, and includes a sensor for sensing a rotated degree of the X axis and the Y axis. When the trackball A112 is rotated in a specific direction by the user, the rotation detector A114 detects the rotation manipulation of the trackball A112 and transfers the corresponding signal to the PCB A130.

In general, a 'trackball device' is a coordinate input device for inputting position information of a coordinate on a monitor screen, and is similar to the structure of a ball mouse, which is an auxiliary input device of a computer. The trackball device is widely used in a notebook computer, a keyboard, or a remote control of electronic appliances, and is nowadays used in the mobile communication terminal.

The trackball unit A110 is well known to those skilled in the art and can be embodied in various structures. Accordingly, a specific configuration and an operation principle of the trackball unit A110 will not be described in detail.

The trackball unit A110 further includes a dome switch A116 for performing a function corresponding to any one of a confirmation key, a selection key, and a mode switching key, when the trackball A112 is pressed down. The dome switch A116 is disposed in the PCB A130 of a position corresponding to the trackball A112. That is, the dome switch A116 is provided in a space defined by the housing A118.

The navigation key unit A120 is adjacently disposed to an outer circumference of the trackball unit A110 and performs at least two input operations with a press method. For this, the navigation key unit A120 includes a manipulation panel A122 disposed to surround the trackball A112 and a contact detector A124 disposed at the PCB A130 to detect the manipulation of the manipulation panel A122.

The manipulation panel A122 is a circular plate, is supported by an upper end of the housing A118, and has top, bottom, right and left portions to be pressed down. At the center of the manipulation panel A122, a central hole A122a is formed to insert the trackball A112 and to be exposed the trackball A112 to the outside. Further, an upper surface of the manipulation panel A122 has a concave central portion for not disturbing the direction manipulation toward top, bottom, right and left portions of the manipulation panel A122 by the trackball A112, and arrows for indicating vertical and lateral directions are displayed on the upper surface of the manipulation panel A122, as shown in FIG. 10. Reference numeral A11 indicates the front case of the main body A10.

Four contact detectors A124 are disposed in a position of the PCB A130 corresponding to top, bottom, right and left portions of the manipulation panel A122. That is, four contact detectors A124 are disposed at an interval of 90° in the PCB A130. When the top, bottom, right and left portions of the manipulation panel A122 are pressed down by the user, the contact detectors A124 perform a function of transferring the corresponding signal to the PCB A130.

Here, a general touch switch can be used as the contact detector A124, and instead of the touch switch, any switch for detecting the movement of the manipulation panel A122 and transferring a direction signal to the PCB A130 may be used. For example, as the contact detector A124, a dome switch may be used.

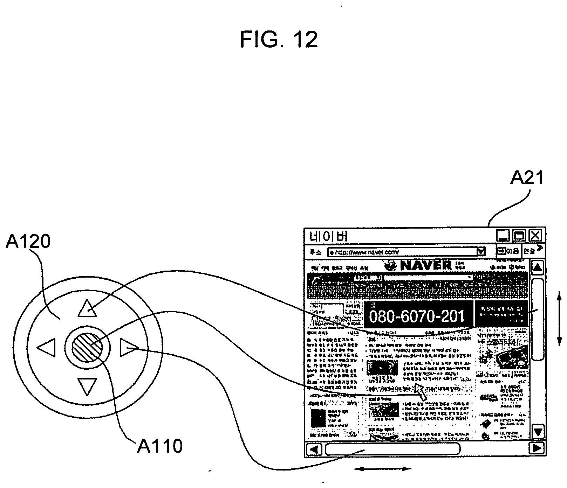

FIG. 12 is a schematic view illustrating an example of applying the input device A100 in an Internet mode.

Referring to FIG. 12, the trackball unit A110 of the input device A100 performs a function of controlling a direction of a cursor displayed on web contents, and the navigation key unit A120 of the input device A100 performs a vertical and lateral scroll control function on web contents. Further, the trackball unit A110 enables a desired article to click on web contents.

Because the input device A100 is divided into two independent input means of the trackball unit A110 and the navigation key unit A120, the direction control of a cursor displayed in the display unit can be allocated to the trackball unit A110 for performing an input operation in various directions including vertical, lateral, and diagonal directions. Accordingly, the input device A100 can perform the quick and convenient direction control in an Internet mode and a game mode.

Particularly, because the display unit of the mobile communication terminal has a size much smaller than a monitor of a computer, a scroll function is frequently used at Internet search, whereby the input device A100 that can allocate a vertical and lateral scroll function to the navigation key unit A120, can provide excellent manipulation convenience.

The input device A100 can be embodied with a user interface of various combinations such as an Internet mode, a game mode, and a camera mode in addition to an example shown in FIG. 12.

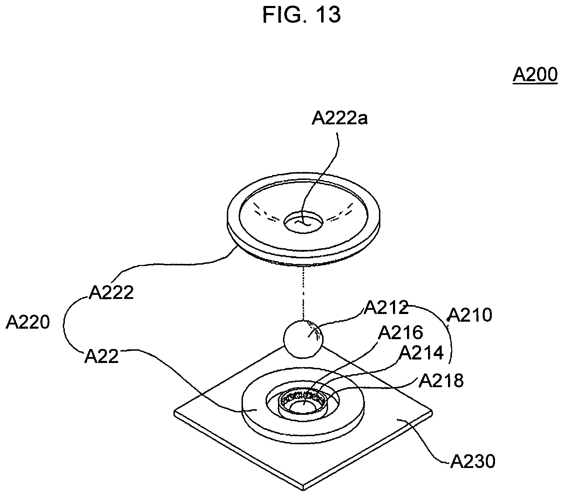

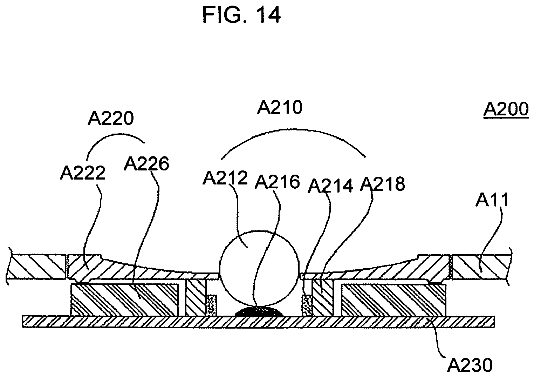

Hereinafter, another exemplary embodiment of the present invention will be described in detail with reference to FIGS. 13 and 14.

FIG. 13 is an exploded perspective view of an input device A200 of a mobile communication terminal according to another exemplary embodiment of the present invention. FIG. 14 is a cross-sectional view of the input device A200 shown in FIG. 13.

Referring to FIGS. 13 and 14, because a configuration of the input device A200 is substantially identical to that of the input device A100 shown in FIG. 10, except that a navigation key unit A220 performs an input operation using a touch method, similar reference numerals designate substantially identical elements, and descriptions thereof will be briefly described.

The input device A200 includes a trackball unit A210, a navigation key unit A220 that is adjacently disposed to an outer circumference of the trackball unit A210 and for performing an input operation with a touch method, and a PCB 230 for receiving a signal that is input through the trackball unit A210 and the navigation key unit A220.

The trackball unit A210 includes a spherical trackball A212 that is provided to rotate within a housing A218 and a rotation detector A214 for detecting the rotation of the trackball A112. The trackball unit A210 further includes a dome switch A216 for performing a function corresponding to any one of a confirmation key, a selection key, and a mode switching key, when the trackball A212 is pressed down. The dome switch A216 is disposed in the PCB A230 of a position corresponding to the trackball 212.

The navigation key unit A220 is adjacently disposed to an outer circumference of the trackball unit A210 and performs an input operation with a press method. For this, the navigation key unit A220 includes a manipulation panel A222 that is disposed to surround the trackball A212 and a sensor A226 that is disposed in the PCB to sense a signal changing when a user' finger contacts with the manipulation panel 222. That is, the navigation key unit A220 performs an input operation with a touch method. Here, the 'touch method' includes a 'touch screen method' of widely using in various terminals and a 'touch wheel method' of employing in an "iPod" product of the Apple company, and is a method of selecting a menu with soft touch of a finger.

The sensor A226 has a cylindrical shape to surround a circumference of the housing A218, and uses a pressure detection sensor for sensing an input direction using the pressure change generating when the user's finger contacts with an upper surface of the manipulation panel A222 or uses a static electricity detection sensor for sensing an input direction using the static electricity change generating when the user's finger contacts with the upper surface of the manipulation panel A222. Any type sensor for embodying a touch method can be applied to the present invention.

The navigation key unit A220 using the touch method can perform a scroll function in an Internet mode. That is, as the user's finger contacts with the upper surface of the manipulation panel A222 and rotates the upper surface in a clockwise or counterclockwise directions, a vertical or lateral scroll function can be embodied in an Internet mode.

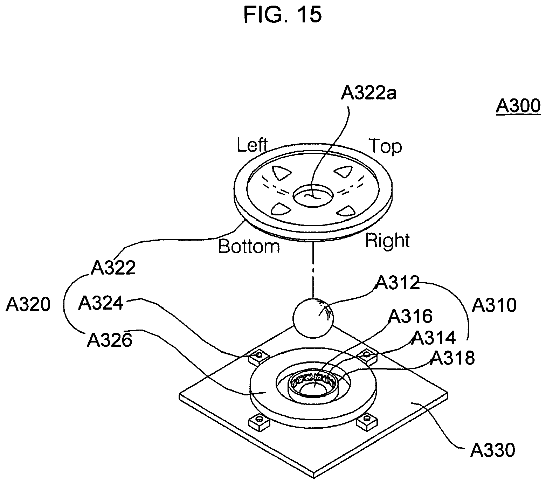

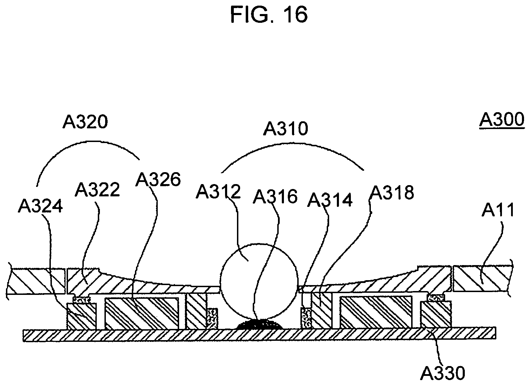

Hereinafter, another exemplary embodiment of the present invention will be described in detail with reference to FIGS. 15 and 16.

FIG. 15 is an exploded perspective view of an input device A300 of a mobile communication terminal according to another exemplary embodiment of the present invention. FIG. 16 is a cross-sectional view of the input device A300 shown in FIG. 7.

Referring to FIGS. 15 and 16, because a configuration of the input device A300 is substantially identical to that of the input device A100 shown in FIG. 10, except that a navigation key unit 320 performs an input operation using two methods of a press method and a touch method, similar reference numerals designate substantially identical elements, and descriptions thereof will be briefly described.

The input device A300 includes a trackball unit A310, a navigation key unit A320 that is adjacently disposed to an outer circumference of the trackball unit A310 and for performing at least two input operations with a press method and an input operation with a touch method, and a PCB A330 for receiving a signal that is input through the trackball unit A310 and the navigation key unit A320.

The trackball unit A310 includes a spherical trackball A312 that is provided to rotate within a housing A318 and a rotation detector A314 for detecting the rotation of the trackball A312. The trackball unit A310 further includes a dome switch A316 for performing a function corresponding to any one of a confirmation key, a selection key, and a mode switching key, when the trackball A312 is pressed down. The dome switch A316 is disposed in the PCB A330 of a position corresponding to the trackball A312.

The navigation key unit A320 is adjacently disposed to an outer circumference of the trackball unit A310 and can perform an input operation using two methods of a press method and a touch method. For this, the navigation key unit A320 includes a manipulation panel A322 that is disposed to surround the trackball A312 and that has top, bottom, right and left portions to be pressed down, four contact detectors A324 that are disposed in a position of the PCB A330 corresponding to top, bottom, right and left portions of the manipulation panel A322 to detect the manipulation of the manipulation panel A322, and a sensor A326 that is disposed in the PCB A330 to detect a signal changing when the user' finger contacts with the manipulation panel A322. The sensor A326 is disposed between the housing A318 and the four contact detectors A324, as shown in FIG. 15.

Because the navigation key unit A320 can perform both the input operation using a press method according to the exemplary embodiment shown in FIG. 10 and the input operation using a touch method according to the exemplary embodiment shown in FIG. 13, interfaces of various combinations can be embodied.

The trackball unit A310 can be used as a mode switching key for performing the switch between a first mode (a direction key mode) of performing an input operation with only a press method in the navigation key unit A320 and a second mode (a touch mode) of performing an input operation with only a touch method in the navigation key unit A320. This prevents the user's confusion that may be generated by mixing a press method and a touch method in a specific mode. Particularly, a user unfamiliar with a touch method can use the navigation key unit A320 with only a press method.

As described above, an input device of a mobile communication terminal according to the present invention includes two independent input means of a trackball unit and a navigation key input, thereby embodying various user interfaces and improving manipulation convenience.

The embodiment of the invention being thus described, it will be obvious that the same may be varied in many ways.

## Claims

1. A mobile communication terminal (A20) comprising an input device (A300), wherein the input device comprises:
a controller unit comprising a trackball unit (A310) comprising a trackball (A312) that is provided to rotate within a housing and a rotation detector (A314) for detecting the rotation of the trackball (A312);
a navigation key unit (A320) that is adjacently disposed to an outer circumference of the controller unit; and
a Printed Circuit Board, PCB, (A330) for receiving a signal that is input through the controller unit and the navigation key unit (A320),
**characterized in that** the navigation key unit (A220, A320) is further configured to receive at least two input operations with a press method and an input operation with a touch method,
wherein the navigation key unit (A320) comprises:
a manipulation panel (A322) that is disposed to surround the trackball, an upper surface of the manipulation panel (A322) having a concave central portion for not disturbing the direction manipulation toward top, bottom, right and left portions of the manipulation panel (A322) by the trackball (A312), the manipulation panel (A322) configured to receive a pressing input and a touch input;
four contact detectors (A324) that are disposed in a position of the PCB (A330) corresponding to top, bottom, right and left portions of the manipulation panel (A322) to detect the manipulation of the manipulation panel (A322) by a pressing input; and
a sensor (A326) that is disposed between the housing and the four contact detectors (A324), the sensor (A326) configured to sense a signal changing according to contact with the manipulation panel (A322) for sensing a touch input,
wherein the Printed Circuit Board (A330) receives the input signal via the rotation detector (A314), the contact detectors (A324) and the sensor (A326), and
wherein the controller unit is used as a mode switching key for performing the switch between a first mode of performing an input operation with only a press method in the navigation key unit (A320) and a second mode of performing an input operation with only a touch method in the navigation key unit (A320).

2. The mobile communication terminal (A20) of claim 1, wherein the controller unit is further configured to perform, when the trackball (A312) is pressed down, a function corresponding to any one of a confirmation key, a selection key, and a mode switching key.

3. The mobile communication terminal (A20) of claim 1, wherein the touch method is at least one of a touch screen method and a touch wheel method.

## Patentansprüche

1. Mobiles Kommunikationsendgerät (A20), umfassend eine Eingabevorrichtung (A300), wobei die Eingabevorrichtung umfasst:
eine Steuereinheit, umfassend eine Trackball-Einheit (A310), der einen Trackball (A312), der bereitgestellt ist, um innerhalb eines Gehäuses zu rotieren, und einen Umdrehungsdetektor (A314) zum Erkennen der Drehung des Trackballs (A312) umfasst;
eine Navigationsschlüsseleinheit (A320), die benachbart zu einem äußeren Umfang der Steuereinheit angeordnet ist; und
eine gedruckte Leiterplatte, PCB, (A330) zum Empfangen eines Signals, das über die Steuereinheit und die Navigationsschlüsseleinheit (A320) eingegeben wird,
**dadurch gekennzeichnet, dass** die Navigationsschlüsseleinheit (A220, A320) ferner konfiguriert ist, um mindestens zwei Eingabeoperationen mit einem Betätigungsverfahren und eine Eingabeoperation mit einem Berührungsverfahren zu empfangen,
wobei die Navigationsschlüsseleinheit (A320) umfasst:
ein Bedienfeld (A322), das angeordnet ist, um den Trackball zu umgeben, eine obere Fläche des Bedienfeldes (A322), das eine mittleren konkaven Abschnitt aufweist, um die Richtungsbetätigung zum oberen, unteren, rechten und linken Abschnitt des Bedienfeldes (A322) durch den Trackball (A312) nicht zu stören, wobei das Bedienfeld (A322) konfiguriert ist, um eine Betätigungseingabe und eine Berührungseingabe zu empfangen;
vier Kontaktdetektoren (A324), die in einer Position der PCB (A330) angeordnet sind, die dem oberen, unteren, rechten und linken Abschnitt des Bedienfeldes (A322) entspricht, um die Bedienung des Bedienfeldes (A322) durch eine Betätigungseingabe zu erkennen; und
einen Sensor (A326), der zwischen dem Gehäuse und den vier Kontaktdetektoren (A324) angeordnet ist, wobei der Sensor (A326) konfiguriert ist, um ein Signal zu erfassen, das sich gemäß einem Kontakt mit dem Bedienfeld (A322) zum Erfassen einer Berührungseingabe verändert,
wobei die gedruckte Leiterplatte (A330) das Eingabesignal über den Rotationsdetektor (A314), die Kontaktdetektoren (A324) und den Sensor (A326) empfängt und
wobei die Steuereinheit als ein Modus-Umschaltschlüssel zum Ausführen des Umschaltens zwischen einem ersten Modus des Ausführens einer Eingabeoperation mit nur einem Betätigungsverfahren in der Navigationsschlüsseleinheit (A320) und einem zweiten Modus des Ausführens einer Eingabe einer Operation mit nur einem Berührungsverfahren in der Navigationsschlüsseleinheit (A320) verwendet wird.

2. Mobiles Kommunikationsendgerät (A20) nach Anspruch 1, wobei die Steuereinheit ferner konfiguriert ist, um, wenn der Trackball (A312) heruntergedrückt ist, eine Funktion auszuführen, die einer von einer Bestätigungstaste, einer Auswahltaste und einer Modus-Umschalttaste entspricht.

3. Mobiles Kommunikationsendgerät (A20) nach Anspruch 1, wobei das Berührungsverfahren mindestens eines aus einem Touch-Screen-Verfahren und einem Touch-Wheel-Verfahren ist.

## Revendications

1. Terminal de communication mobile (A20) comprenant un dispositif d'entrée (A300), dans lequel le dispositif d'entrée comprend :
une unité de dispositif de commande comprenant une unité de boule de commande (A310) comprenant une boule de commande (A312) qui est prévue pour tourner à l'intérieur d'un boîtier et un détecteur de rotation (A314) pour détecter la rotation de la boule de commande (A312) ;
une unité de touche de navigation (A320) qui est disposée adjacente à une circonférence extérieure de l'unité de dispositif de commande ; et
une carte à circuits imprimés, PCB, (A330) pour recevoir un signal qui est entré par l'intermédiaire de l'unité de dispositif de commande et de l'unité de touche de navigation (A320),
**caractérisé par le fait que** l'unité de touche de navigation (A220, A320) est en outre configurée pour recevoir au moins deux opérations d'entrée avec un procédé par pression et une opération d'entrée avec un procédé tactile,
dans lequel l'unité de touche de navigation (A320) comprend :
un panneau de manipulation (A322) qui est disposé pour entourer la boule de commande, une surface supérieure du panneau de manipulation (A322) ayant une partie centrale concave pour ne pas perturber la manipulation de direction vers des parties haute, basse, droite et gauche du panneau de manipulation (A322) par la boule de commande (A312), le panneau de manipulation (A322) étant configuré pour recevoir une entrée par pression et une entrée tactile ;
quatre détecteurs de contact (A324) qui sont disposés dans un emplacement de la PCB (A330) correspondant à des parties haute, basse, droite et gauche du panneau de manipulation (A322) pour détecter la manipulation du panneau de manipulation (A322) par une entrée par pression ; et
un capteur (A326) qui est disposé entre le boîtier et les quatre détecteurs de contact (A324), le capteur (A326) étant configuré pour détecter un changement de signal selon un contact avec le panneau de manipulation (A322) pour détecter une entrée tactile,
dans lequel la carte à circuits imprimés (A330) reçoit le signal d'entrée par l'intermédiaire du détecteur de rotation (A314), des détecteurs de contact (A324) et du capteur (A326), et
dans lequel l'unité de dispositif de commande est utilisée en tant que touche de commutation de mode pour réaliser la commutation entre un premier mode de réalisation d'une opération d'entrée avec seulement un procédé par pression dans l'unité de touche de navigation (A320) et un second mode de réalisation d'une opération d'entrée avec seulement un procédé tactile dans l'unité de touche de navigation (A320).

2. Terminal de communication mobile (A20) selon la revendication 1, dans lequel l'unité de dispositif de commande est en outre configurée pour réaliser, lorsque la boule de commande (A312) est pressée vers le bas, une fonction correspondant à l'une quelconque d'une touche de confirmation, d'une touche de sélection et d'une touche de commutation de mode.

3. Terminal de communication mobile (A20) selon la revendication 1, dans lequel le procédé tactile est au moins l'un d'un procédé par écran tactile et d'un procédé par roue tactile.
